# EUROPEAN PATENT APPLICATION

(11) **EP 2 136 585 A1**
(43) Date of publication of application: **23.12.2009**
(21) Application number: 08011004.2
(22) Date of filing: 18.06.2008
(51) Int. Cl.: H04W 28/06

(54) **Packets multiplexing method over ip interface**

(71) Applicant: Vodafone Group PLC, Newbury Berkshire RG14 2FN (GB); Vodafone España, S.A., 28108 Alcobendas Madrid (ES)
(72) Inventor: Zas, Luis, 28020 Madrid (ES); Dominguez, Fran, 28020 Madrid (ES); Garriga, Beatriz, 28020 Madrid (ES)
(74) Representative: Carvajal y Urquijo, Isabel

(57) **Abstract**

Packets multiplexing method over IP interface further comprising the steps of:
i) a first step of multiplexing frame protocol packets, including a protocol which comprises, at least:
a) the number of packets multiplexed; and
b) the byte number in which every frame protocol packet starts;
ii) a second step of sending the IP packet over the transport network when either the maximum time defined expires, or once PDUs from the upper layer fill in reaching the MTU value of the IP packet;
in such way that the IP packet comprises one lP header, the protocol and a plurality of transport channel frame protocol packets.

## Description

### Technical field of the invention

The object of the present invention is to provide a method for multiplexing the frame protocol packets over UDP/IP.

### Background of the invention

In 3G communications the lub can be carried over ATM or IP protocols. In the IP case, the frame protocol of the radio network channels is transported over UDP/IP packets.

According to the 3GPP standards, every DCH and DSCH channel is transported over UDP/IP packets, but every user is transported over different IP packets. According to the 25.426 rule, the UDP over IP shall be supported as the transport for data streams on lub or lur interfaces. The transport bearer is identified by the UDP port number and the IP address (source UDP port number, destination UDP port number, source IP address, destination IP address).

Therefore, if the packets are short, and given the big IP header, there is a high inefficiency in the transport. In ATM case, the problem is solved through the use of VC/VC and the short length of ATM cells. Notwithstanding, in IP case, the header compression or other techniques could be used, but then the intermediate routers between the node B and the RNC have to support them.

### Summary of the invention

In order to solve the above described problem, the packets multiplexing method over lub IP interface is below described. The method comprises a new protocol inserted into the IP packet, just after the IP header and before the frame protocol header. Such protocol comprising:
(a) the number of packets multiplexed;
(b) the byte number in which every frame protocol packet starts;
   and when either the maximum time defined expires or once PDUs frame fill in until reaching the MTU value, the IP packet is sent over the transport layer.

The multiplexed packets can be from different users of from the same user.
For example, if there is one user transmitting voice frames, they can be cumulated in a buffer until a maximum time expires and all of them are sent in one IP packet.
Or several voice call users transmitting in the same cell and same timeframe can be multiplexed together in the same IP packet.

With the above described solution, the efficiency of the transport network can be increased up to 30% and avoid the inefficiencies of the big IP headers allowing capacity for more users / traffic. Also, the intermediate routers have no necessity of supporting the implemented protocol. This protocol is transparent for the transport network.

### Brief description of the drawings

Following, it is briefly described some figures that helps to better understand the invention. The figures also describe an embodiment of the present invention, as non-imitative example:
FIGURE 1.- Represents schematically the standard lub over IP protocol stack including the new method.
FIGURE 2.- Shows the IP packet including the method object of the present invention.
FIGURE 3.- Shows the method object of the present invention in front of the prior art.

### Preferred embodiment of the invention

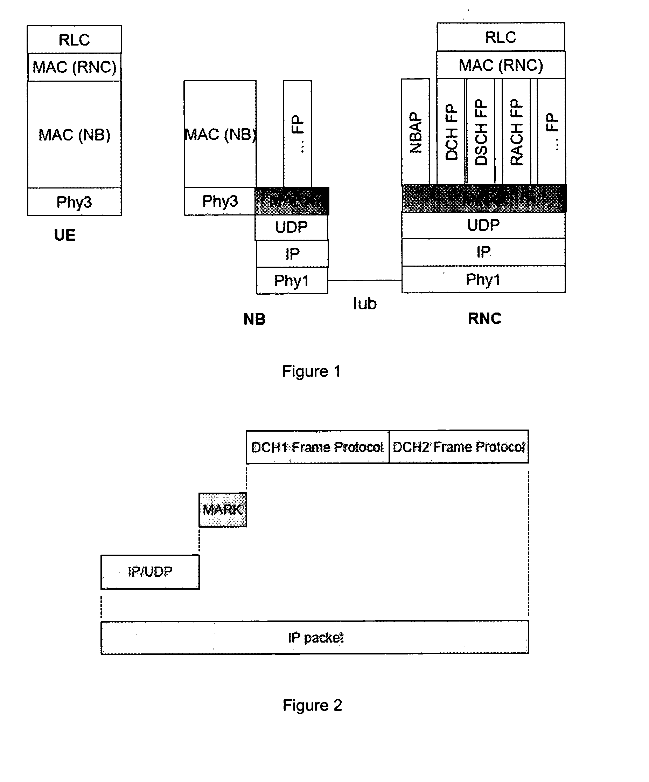

In the figure 1 it can be seen the protocol stack for lub over IP. The transmission in Downlink of the transport channels over the lub is performed with the Frame Protocol which is de-encapsulated in the Node B and mapped into the physical channels to transmit over the air interface (Uu). On the other hand, in Uplink is the NodeB which encapsulate the FP packets into the UDP/IP protocol.

Every user has a dedicated channel to transmit the user plane using the MAC-d protocol which is mapped through the DCH or DSCH channels into the Frame Protocol over the lub. Everyone is then mapped into a different UDP/IP packet.

The new method, seen as a new protocol, aims to multiplex different Frame Protocols packet into the same UDP/IP packet. This new protocol is called MARK in the figure 1.

The multiplexing stops when the MTU is reached, for example 1500 bytes (typically used in IP), or a maximum timer expires, for example 30 ms which can be configurable. That means that the RNC (or the NB) will wait for 30 ms to fill in the IP packet with FP packets from the same or different users until it sends the packet.

In the figure 2, it can be seen the new MARK header added by the new method which add information of how many frame protocols packets are multiplexed (2 in the case of the example of the figure 2) and the byte number where they start. In this way, the NB can de-multiplex the packets. In the example of the figure, it is shown different DCH (Dedicated Channels) but can be done with any other transport channel defined in 3GPP (as presented in figure 1).

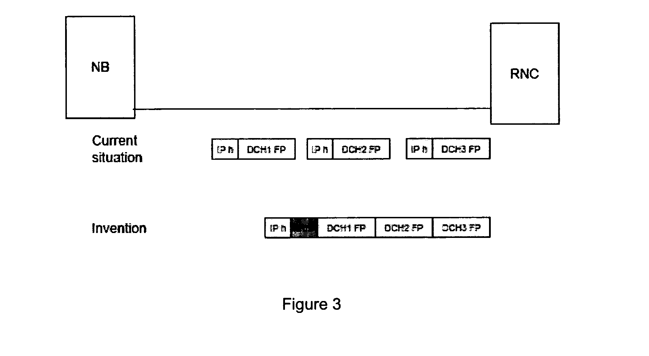

In this way the ratio between the frame protocol bytes and the IP header is increased and also the efficiency. In figure 3, there is another example of multiplexing 3 FP packets into 1 IP and transmitted between RNC and Node B, wherein the MARK protocol is implemented after one general IP header and just before a plurality of frame protocols. It is also shown a comparison with the current situation where each frame protocol is emitted with its own IP header

## Claims

1. -Packets multiplexing method over IP interface **characterized in that** it comprises the steps of:
(i) a first step of multiplexing frame protocol packets, including a protocol which comprises, at least:
(a) the number of packets multiplexed; and
(b) the byte number in which every frame protocol packet starts;
(ii) a second step of sending the IP packet over the transport network when either the maximum time defined expires, or once PDUs from the upper layer fill in reaching the MTU value of the IP packet;
in such way that the IP packet comprises one IP header, the protocol and a plurality of transport channel frame protocol packets.
